# EUROPÄISCHE PATENTSCHRIFT

(11) **EP 0 865 506 B1**
(45) Veröffentlichungstag und Bekanntmachung des Hinweises auf die Patenterteilung: **16.05.2001**
(21) Anmeldenummer: 97930247.8
(22) Anmeldetag: 09.07.1997
(51) Int. Cl.: C21B 13/14

(54) **VERFAHREN ZUR HERSTELLUNG VON FLÜSSIGEM METALL UND ANLAGE ZUR DURCHFÜHRUNG DES VERFAHRENS**
PROCESS FOR PRODUCING LIQUID METAL AND FACILITIES FOR CARRYING OUT THE PROCESS
PROCEDE DE PRODUCTION DE METAL LIQUIDE ET INSTALLATION POUR METTRE EN OEUVRE LEDIT PROCEDE

(30) Priorität: 10.07.1996 AT 122696
(43) Veröffentlichungstag der Anmeldung: 23.09.1998
(73) Patentinhaber: Voest Alpine Industrieanlagenbau Gmbh, 4020 Linz (AT); POHANG IRON & STEEL CO., LTD., Pohang City, Kyong Sang Book-Do 790-785 (KR); RESEARCH INSTITUTE OF INDUSTRIAL SCIENCE & TECHNOLOGY, INCORPORATED FOUNDATION, Pohang City, Kyong Sang Book-do 790-330 (KR)
(72) Erfinder: KEPPLINGER, Leopold, Werner, A-4060 Leonding (AT); WURM, Johann, A-4283 Bad Zell (AT); SCHENK, Johannes-Leopold, A-4040 Linz (AT)
(74) Vertreter: Kopecky, Helmut, Dipl.-Ing.
(86) Internationale Anmeldenummer: AT9700155
(87) Internationale Veröffentlichungsnummer: WO9801585

(56) Entgegenhaltungen:
- DE-B- 1 167 368
- US-A- 2 964 308

## Beschreibung

Die Erfindung betrifft ein Verfahren zur Herstellung von flüssigem Metall, insbesondere Roheisen oder flüssigen Stahlvorprodukten, aus von Erz, insbesondere Eisenerz, und Zuschlagstoffen gebildeten Einsatzstoffen, wobei das Erz in mindestens einer Reduktionszone zu Metallschwamm direkt reduziert wird, der Metallschwamm mit Zuschlagstoffen in einer nur durch Zufuhr von Kohlenstoffträgern und Einblasen von sauerstoffhältigem Gas beheizten Einschmelzvergasungszone erschmolzen und ein CO- und H₂-hältiges, als Reduktionsgas dienendes Prozeßgas erzeugt wird, welches in die Reduktionszone eingeleitet und dort umgesetzt und anschließend abgezogen wird, wobei schlackenbildende Zuschlagstoffe, insbesondere Kalziumkarbonat, Dolomit etc., nur mittels des Prozeßgases in einer von der Reduktions- und Einschmelzzone getrennten Kalzinierzone kalziniert werden, sowie eine Anlage zur Durchführung des Verfahrens.

Es ist bekannt, dem Erz Schlackenbildner wie CaCO₃, Dolomit etc. zuzumischen und die Kalzinierung gleichzeitig und im selben Gefäß wie die Reduktion des Erzes, d.h. in der Reduktionszone durchzuführen, wobei die Kalzinierung mit Hilfe des Reduktionsgases erfolgt. Bei einem mehrstufigen Reduktionsverfahren, d.h. bei einem Verfahren, bei dem mehrere Reduktionszonen in Serie hintereinander geschaltet vorgesehen sind, erfolgt die vollständige Kalzinierung erst in der Endreduktionsstufe, da erst in dieser Stufe das Reduktionsgas die für eine vollständige Kalzinierung erforderliche Temperatur aufweist. Nachteilig ist hierbei, daß es zu einer Qualitätsverschlechterung des Reduktionsgases kommt, und weiters, daß das Reduktionsgas durch den endotherm ablaufenden Kalzinierungsprozeß in seiner Temperatur abgesenkt wird. Ein weiterer Nachteil ist noch darin zu sehen, daß bei der Reduktion von Feinerz die schlackenbildenden Zusatzstoffe etwa das gleiche Kornband aufweisen müssen, damit die vom Feinerz gebildete Wirbelschicht im Reduktionsreaktor weitgehend ungestört bleibt. Grobkörnige Zuschlagstoffe lassen sich auf diese Art und Weise nicht verwerten.

Aus der DE-A - 42 40 197 ist ein Verfahren der eingangs beschriebenen Art bekannt, bei dem schlackenbildende Zusatzstoffe in einer eigenen Kalzinierzone eines Kalzinierreaktors behandelt werden, wobei für den Zweck des Kalzinierens aus dem Einschmelzvergaser stammendes Reduktionsgas herangezogen wird. Gemäß der DE-A - 42 40 197 werden die kalzinierten Zuschlagstoffe in den Reduktionsreaktor in die Reduktionszone eingebracht und mit dem bereits teilweise reduzierten Erz durch den Reduktionsschacht weiterbewegt und schließlich mit dem reduzierten Erz in den Einschmelzvergaser eingebracht.

Nachteilig ist hier ebenfalls, daß die Körnung der Zuschlagstoffe nicht frei wählbar ist. Die Körnung bzw. das Komband muß vielmehr der Körnung bzw. dem Kornband des durch den Reduktionsschacht bewegten Feinerzes entsprechen. Weiters ist eine negative Beeinflussung des Reduktionsverfahrens, insbesondere der Fertigreduktion zu erwarten, da der Stoff- und Gasfluß sowie das Temperaturprofil durch das Chargieren der Zuschlagstoffe gestört werden.

Aus der DE-B-11 67 368 ist ein Verfahren bekannt, bei dem Erze in einer Niederschachtofenanlage verhüttet werden wobei die Niederschachtofenanlage einen Elektroniederschachtofen, eine Vorreduktionseinrichtung, eine Verkokungseinrichtung und einen Kalkbrennofen aufweist. Das in der Verkokungseinrichtung anfallende heiße Schwachgas oder das im Niederschachtofen anfallende Gichtgas werden der Vorreduktionseinrichtung als Reduktionsgas zugeführt. Der Kalkbrennofen, der zur Vorreduktionseinrichtung hinsichtlich des Materialflusses parallelgeschaltet ist, wird ebenfalls mit dem Gichtgas des Niederschachtofens und/oder dem Kokungsgas der Verkokungseinrichtung betrieben.

Die Erfindung bezweckt die Vermeidung der oben genannten Nachteile und Schwierigkeiten und stellt sich die Aufgabe, ein Verfahren der eingangs beschriebenen Art sowie eine Anlage zur Durchführung des Verfahrens zu schaffen, welche das Verarbeiten von schlackenbildenden Zusatzstoffen in jeder beliebigen Körnung ermöglichen. Insbesondere soll das Reduktionsverfahren für das Erz völlig ungestört von Zuschlagstoffen erfolgen und der Einsatz von grobkörnigen Zuschlagstoffen möglich sein, so daß in der Einschmelzvergasungszone eine hinreichende Porosität vorhanden ist.

Diese Aufgabe wird bei einem Verfahren der eingangs beschriebenen Art dadurch gelöst, daß die Kalzinierzone hinsichtlich des Materialflusses zur Reduktionszone parallelgeschaltet ist und die kalzinierten Zuschlagstoffe direkt in den Einschmelzvergaser eingebracht werden.

Wenn genügend heißes Prozeßgas zur Verfügung steht, ist zweckmäßig die Kalzinierzone hinsichtlich des Prozeßgasstromes zur Reduktionszone ebenfalls parallelgeschaltet, wobei vorteilhaft das Prozeßgas nach Ableitung aus der Einschmelzvergasungszone gereinigt und gekühlt wird und sodann ein Teil des Prozeßgases in die Reduktionszone und ein Teil des Prozeßgases in die Kalzinierzone eingeleitet wird.

Da hierbei das aus der Kalzinierzone austretende Prozeßgas noch sehr heiß ist, wird dieses zweckmäßig dem aus der Reduktionszone austretenden Prozeßgas zugemischt und vorteilhaft zur Vorwärmung und/oder Vor-Reduktion des Erzes in einer Vor-Reduktionszone herangezogen.

Gemäß einer weiteren vorteilhaften Ausführungsvariante ist die Kalzinierzone hinsichtlich des Prozeßgasstromes zur Reduktionszone in Serie geschaltet, wobei das Prozeßgas zuerst die Reduktionszone und anschließend die Kalzinierzone durchströmt.

Da hierbei das Prozeßgas schon etwas abgekühlt ist, wird vorteilhaft in die Kalzinierzone ein sauerstoffhältiges Gas eingeleitet und ein Teil des Prozeßgases verbrannt.

Eine Anlage zur Durchführung des Verfahrens mit mindestens einem Reduktionsreaktor, in den das Erz über eine Förderleitung in einer Richtung und das Reduktionsgas über eine Reduktionsgas-Zuleitung in die entgegengesetzte Richtung geführt ist, und mit einem Einschmelzvergaser, in den eine das Reduktionsprodukt aus dem Reduktionsreaktor führende Förderleitung mündet, wobei der Einschmelzvergaser nur durch Zuleitungen für sauerstoffhältige Gase und Kohlenstoffträger beheizt ist und einen Abstich für flüssiges Metall und Schlacke sowie eine in den Reduktionsreaktor mündende Reduktionsgas-Zuleitung für im Einschmelzvergaser gebildetes Reduktionsgas aufweist, ist dadurch gekennzeichnet, daß ein Kalzinierreaktor hinsichtlich des Feststoffflusses in Parallelanordnung zum Reduktionsreaktor vorgesehen ist, wobei der Kalzinierreaktor mit einer die kalzinierten Stoffe zum Einschmelzvergaser leitenden Zuleitung mit dem Einschmelzvergaser leitungsmäßig verbunden ist.

Zweckmäßig zweigt von der Reduktionsgas-Zuleitung, die zum Reduktionsreaktor führt, eine Zweigleitung ab und mündet in den Kalzinierreaktor.

Gemäß einer bevorzugten Ausführungsform ist in der Reduktionsgas-Zuleitung eine Gasreinigungseinrichtung vorgesehen und zweigt die Zweigleitung von der Reduktionsgas-Zuleitung nach der Gasreinigungseinrichtung ab.

Eine weitere bevorzugte Ausführungsform ist dadurch gekennzeichnet, daß der Kalzinierreaktor mittels einer Abgasleitung mit einem als erste der Reduktionszonen dienenden Vorwärmreaktor für das Erz leitungsmäßig verbunden ist.

Zweckmäßig geht vom Reduktionsreaktor eine Ableitung für umgesetztes Reduktionsgas aus, wobei von dieser Ableitung eine Zweigleitung in den Kalzinierreaktor mündet, wobei vorteilhaft in den Kalzinierreaktor eine Leitung für ein sauerstoffhältiges Gas mündet.

Vorzugsweise ist der Kalzinierreaktor als Schachtofen oder Drehrohrofen oder Wanderrost oder Etagenofen oder ein- oder mehrstufiger Wirbelschichtreaktor oder Gaszyklon oder als mehrstufige Gaszyklonkaskade ausgebildet.

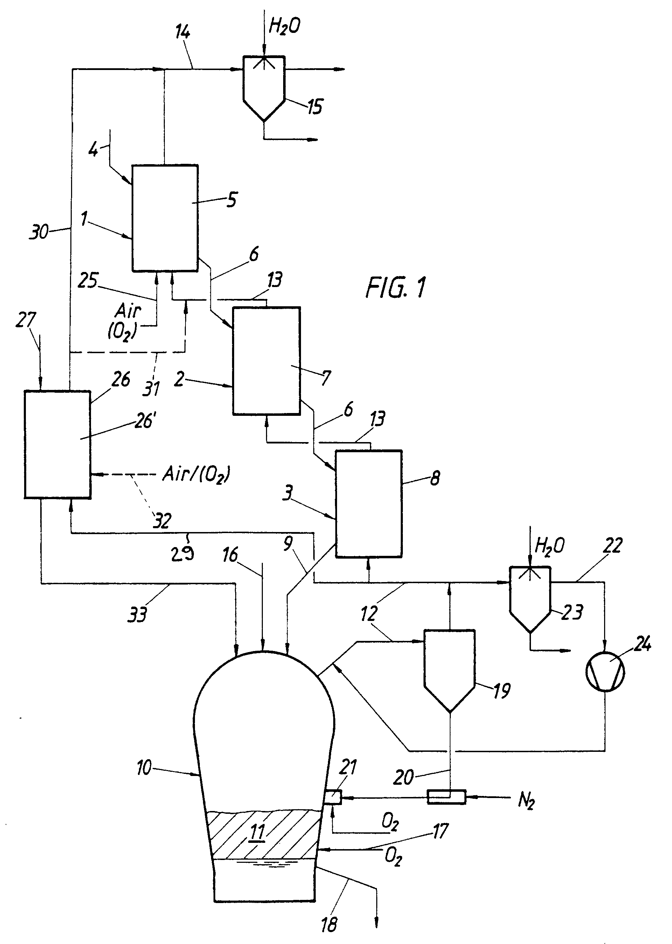

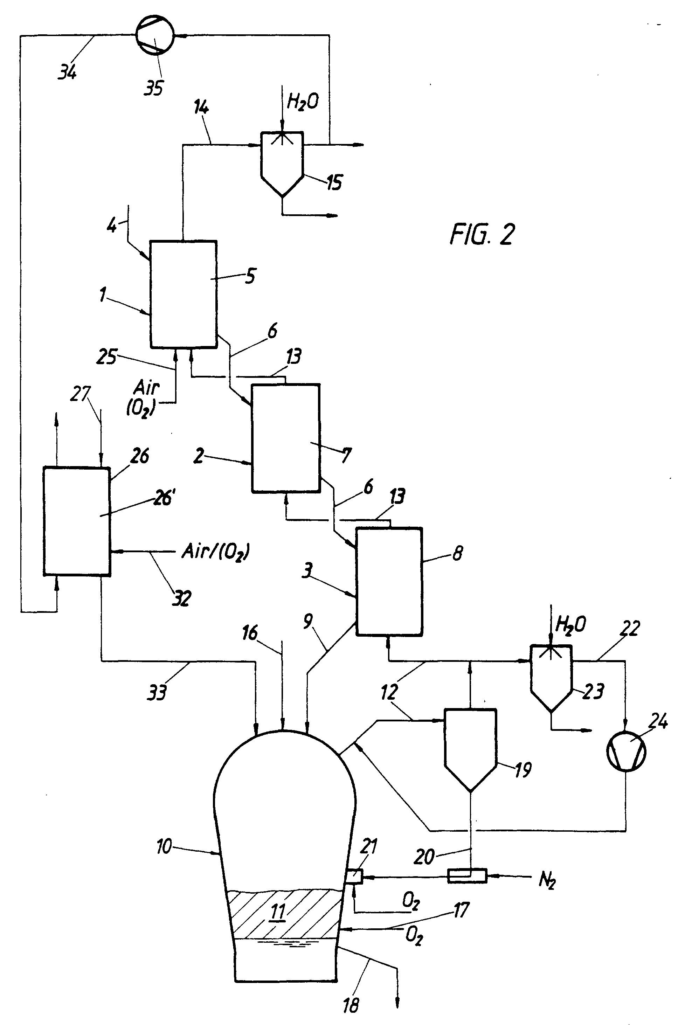

Die Erfindung ist nachfolgend anhand zweier in der Zeichnung dargestellter Ausführungsbeispiele näher erläutert, wobei die Fig. 1 und 2 beispielhaft eine Gesamtanlage zum Herstellen von Metallschmelzen, insbesondere Roheisen oder flüssigen Stahlvorprodukten, in schematischer Darstellung zeigen.

Die Anlage sowohl nach Fig. 1 als auch nach Fig. 2 weist drei in Serie hintereinander geschaltete Reduktionsreaktoren auf, die als Wirbelschichtreaktoren 1 bis 3 ausgebildet sind. Ein zumindest einen Feinkornanteil aufweisendes Erz, wie ein eisenoxidhältiges Material, z.B. Feinerz, wird über eine Erzzuleitung 4 dem ersten Wirbelschichtreaktor 1, in dem in einer Vorwärmstufe 5 eine Vorerwärmung des Feinerzes und eventuell eine Vor-Reduktion stattfinden, zugeleitet und anschließend von Wirbelschichtreaktor 1 zu Wirbelschichtreaktor 2, 3 über Förderleitungen 6 geleitet. In dem Wirbelschichtreaktor 2 erfolgt in einer Vor-Reduktionsstufe 7 eine Vor-Reduktion und im Wirbelschichtreaktor 3 in einer End-Reduktionsstufe 8 eine End- bzw. Fertig-Reduktion des Feinerzes zu Eisenschwamm jeweils mittels eines Prozeßgases.

Das fertigreduzierte Material, also der Eisenschwamm, wird über eine Förderleitung 9 in einen Einschmelzvergaser 10 geleitet. Im Einschmelzvergaser 10 wird in einer Einschmelzvergasungszone 11 aus Kohlenstoffträgern, wie Kohle, und sauerstoffhältigem Gas ein CO- und H₂-hältiges als Reduktionsgas dienendes Prozeßgas erzeugt, das über eine Reduktionsgas-Zuleitung 12 in den in Fließrichtung des Feinerzes letztangeordneten Wirbelschichtreaktor 3 eingeleitet wird. Das Reduktionsgas wird dann im Gegenstrom zum Erzdurchfluß von Wirbelschichtreaktor 3 zu Wirbelschichtreaktor 2 bis 1 geführt, u.zw. über die Verbindungsleitungen 13, aus dem Wirbelschichtreaktor 1 als Topgas über eine TopgasAbleitung 14 abgeleitet und anschließend in einem Naßwäscher 15 gekühlt und gewaschen. Es kann sodann einem Verbraucher zugeleitet werden.

Der Einschmelzvergaser 10 weist eine Zuführung 16 für feste Kohlenstoffträger, eine Zuführung 17 für sauerstoffhältige Gase sowie gegebenenfalls Zuführungen für bei Raumtemperatur flüssige oder gasförmige Kohlenstoffträger, wie Kohlenwasserstoffe, sowie für gebrannte Zuschläge auf. In dem Einschmelzvergaser 10 sammelt sich unterhalb der Einschmelzvergasungszone 11 schmelzflüssiges Roheisen bzw. schmelzflüssiges Stahlvormaterial und schmelzflüssige Schlacke, die über einen Abstich 18 abgestochen werden.

In der Reduktionsgas-Zuleitung 12, die vom Einschmelzvergaser 10 ausgeht und in den Wirbelschichtreaktor 3 mündet, ist eine Entstaubungseinrichtung 19, wie ein Heißgaszyklon, vorgesehen, wobei die in diesem Zyklon abgeschiedenen Staubteile dem Einschmelzvergaser 10 über die Rückleitung 20 mit Stickstoff als Fördermittel und über einen Brenner 21 unter Einblasen von Sauerstoff zugeführt werden.

Eine Möglichkeit zur Einstellung der Reduktionsgastemperatur ergibt sich durch die vorzugsweise vorgesehene Gasrückführleitung 22, die von der Reduktionsgas-Zuleitung 12 ausgeht und einen Teil des Reduktionsgases über einen Wäscher 23 und einen Verdichter 24 in diese Reduktionsgas-Zuleitung 12 wiederum zurückführt, u.zw. vor der Anordnung des Heißgaszyklons 19.

Zur Einstellung der Vorerwärmungstemperatur des Feinerzes kann der Vorerwärmungsstufe 5, also dem Wirbelschichtreaktor 1, ein sauerstoffhältiges Gas, wie Luft oder Sauerstoff, über eine Leitung 25 zugeführt werden, wodurch eine Teilverbrennung des der Vorerwärmungsstufe 5 zugeführten umgesetzten Reduktionsgases stattfindet.

Gemäß der in Fig. 1 dargestellten Ausführungsform ist ein eigener Kalzinierreaktor 26 vorgesehen, der hinsichtlich des Materialflusses, d.h. der über die Zuleitung 27 in den Kalzinierreaktor 26 eingebrachten schlackenbildenden Zusatzstoffe und der Weiterleitung der kalzinierten Zuschlagstoffe über eine Zuführleitung in den Einschmelzvergaser 10, zu den Wirbelschichtreaktoren 1 bis 3 parallelgeschaltet ist. Als Prozeßgas für die Kalzinierung wird von der Reduktionsgas-Zuleitung 12 abgezweigtes Reduktionsgas in die Kalzinierzone 26' im Kalzinierreaktor 26 über eine Zweigleitung 29 eingebracht. Das aus dem Kalzinierreaktor 26 austretende Abgas wird entweder dem Topgas mit einer in die Topgasableitung 14 einmündenden Abgasleitung 30 zugemischt oder es wird für die Vorwärmung bzw. Vor-Reduktion im Wirbelschichtreaktor 1 herangezogen, wobei das aus dem Kalzinierreaktor 26 abgeleitete Abgas dem Wirbelschichtreaktor 1 über eine Abgaszuleitung 31 zugeführt wird. Diese mündet vorteilhaft in die in diesen Wirbelschichtreaktor 1 einmündende Verbindungsleitung 13, über die umgesetztes Reduktionsgas aus dem Wirbelschichtreaktor 2 in den Wirbelschichtreaktor 1 strömt.

Falls erforderlich, kann dem Kalzinierreaktor 26 Luft oder ein anderes sauerstoffhältiges Gas oder reiner Sauerstoff über eine Leitung 32 zugeführt werden, wodurch es zu einer Teilverbrennung des in den Kalzinierreaktor 26 eingeleiteten Reduktionsgases kommt, sodaß dessen Temperatur erhöht wird und der Kalzinierprozeß in gewünschter Weise stattfinden kann.

Die Zuführung der kalzinierten Zuschlagstoffe in den Einschmelzvergaser 10 kann über eine eigene direkt in den Einschmelzvergaser 10 mündende Zuleitung 33, wie in Fig. 1 dargestellt, erfolgen oder auch dadurch, daß diese Zuleitung 33 in die Förderleitung 9 für den Eisenschwamm oder in die Zuführung 16 für feste Kohlenstoffträger mündet.

Gemäß der in Fig. 2 dargestellten Ausführungsform ist der Kalzinierreaktor 26 im Hinblick auf den Materialdurchfluß ebenfalls zu den Wirbelschichtreaktoren 1 bis 3 parallel geschaltet, jedoch im Hinblick auf den Gasdurchfluß in Serie zu den Wirbelschichtreaktoren 1 bis 3 angeordnet. Als Prozeßgas für die Kalzinierung wird von der Topgasableitung 14 über eine Zweigleitung 34 mit Verdichter 35 abgeleitetes Topgas in den Kalzinierreaktor 26 eingebracht. Um die für den Kalzinierprozeß notwendige Temperatur zu erzielen, wird Luft oder ein sauerstoffhältiges Gas oder Sauerstoff über eine Zuleitung 32 dem Kalzinierreaktor 26 zugeleitet, wodurch es zu einer Teilverbrennung des Prozeßgases und damit zur notwendigen Temperaturerhöhung desselben kommt.

### Erfindungsgemäß ergeben sich die nachfolgenden Vorteile:

Für die schlackenbildenden Zuschlagstoffe gibt es keine Einschränkung hinsichtlich der Korngröße; sie können mit beliebiger Korngröße eingesetzt werden, wobei vorteilhaft grobkörnige Zuschlagstoffe Verwendung finden, da es hierbei zu keiner Porositätsverringerung im Fließbett des Einschmelzvergasers 10 kommt.

Ein weiterer wesentlicher Vorteil ist darin zu sehen, daß es zu keiner Beeinflussung der Zusammensetzung des Reduktionsgases beim Reduktionsprozeß kommt, und zwar in keiner der Vorwärm- 5 und/oder Reduktionsstufen 7, 8.

Es läßt sich das Topgas, das noch einen Heizwert aufweist, nutzen.

Das Temperaturprofil der Zuschlagstoffe führt zu keiner Beeinflussung der Reduktionszonen.

## Patentansprüche

1. Verfahren zur Herstellung von flüssigem Metall, insbesondere Roheisen oder flüssigen Stahlvorprodukten, aus von Erz, insbesondere Eisenerz, und Zuschlagstoffen gebildeten Einsatzstoffen, wobei das Erz in mindestens einer Reduktionszone (5, 7, 8) zu Metallschwamm direkt reduziert wird, der Metallschwamm mit Zuschlagstoffen in einer nur durch Zufuhr von Kohlenstoffträgern und Einblasen von sauerstoffhältigem Gas beheizten Einschmelzvergasungszone (11) erschmolzen und ein CO- und H₂-hältiges, als Reduktionsgas dienendes Prozeßgas erzeugt wird, welches in die Reduktionszone (5, 7, 8) eingeleitet und dort umgesetzt und anschließend abgezogen wird, wobei schlackenbildende Zuschlagstoffe, insbesondere Kalziumkarbonat, Dolomit etc., nur mittels des Prozeßgases in einer von der Reduktions- (5, 7, 8) und Einschmelzzone (11) getrennten Kalzinierzone (26') kalziniert werden, dadurch gekennzeichnet, daß die Kalzinierzone (26') hinsichtlich des Materialflusses zur Reduktionszone (5, 7, 8) parallelgeschaltet ist und die kalzinierten Zuschlagstoffe direkt in den Einschmelzvergaser (10) eingebracht werden.

2. Verfahren nach Anspruch 1, dadurch gekennzeichnet, daß die Kalzinierzone (26') . hinsichtlich des Prozeßgasstromes zur Reduktionszone (5, 7, 8) ebenfalls parallelgeschaltet ist (Fig. 1).

3. Verfahren nach Anspruch 2, dadurch gekennzeichnet, daß das Prozeßgas nach Ableitung aus der Einschmelzvergasungszone (11) gereinigt und gekühlt wird und sodann ein Teil des Prozeßgases in die Reduktionszone (5, 7, 8) und ein Teil des Prozeßgases in die Kalzinierzone (26') eingeleitet wird.

4. Verfahren nach Anspruch 3, dadurch gekennzeichnet, daß aus der Kalzinierzone (26') austretendes Prozeßgas dem aus der Reduktionszone (7) austretenden Prozeßgas zugemischt wird.

5. Verfahren nach Anspruch 3 oder 4, dadurch gekennzeichnet, daß aus der Kalzinierzone (26') austretendes Prozeßgas zur Vorwärmung - und/oder Vor-Reduktion des Erzes in einer Vor-Reduktionszone (5) herangezogen wird.

6. Verfahren nach Anspruch 1, dadurch gekennzeichnet, daß die Kalzinierzone (26') hinsichtlich des Prozeßgasstromes zur Reduktionszone (5, 7, 8) in Serie geschaltet ist, wobei das Prozeßgas zuerst die Reduktionszone (5, 7, 8) und anschließend die Kalzinierzone (26') durchströmt (Fig. 2).

7. Verfahren nach Anspruch 6, dadurch gekennzeichnet, daß in die Kalzinierzone (26') ein sauerstoffhältiges Gas eingeleitet wird und ein Teil des Prozeßgases verbrannt wird.

8. Anlage zur Durchführung des Verfahrens nach einem oder mehreren der Ansprüche 1 bis 7, mit mindestens einem Reduktionsreaktor (1, 2, 3), in den das Erz über eine Förderleitung (6) in einer Richtung und das Reduktionsgas über eine Reduktionsgas-Zuleitung (12) in die entgegengesetzte Richtung geführt ist. und mit einem Einschmelzvergaser (10), in den eine das Reduktionsprodukt aus dem Reduktionsreaktor (3) führende Förderleitung (9) mündet, wobei der Einschmelzvergaser (10) nur durch Zuleitungen (17, 16) für sauerstoffhältige Gase und Kohlenstoffträger beheizt ist und einen Abstich (18) für flüssiges Metall und Schlacke sowie eine in den Reduktionsreaktor (3) mündende Reduktionsgas-Zuleitung (12) für im Einschmelzvergaser (10) gebildetes Reduktionsgas aufweist, dadurch gekennzeichnet, daß ein Kalzinierreaktor (26) hinsichtlich des Feststoffflusses in Parallelanordnung zum Reduktionsreaktor (1, 2, 3) vorgesehen ist, wobei der Kalzinierreaktor (26) mit einer die kalzinierten Stoffe zum Einschmelzvergaser (10) leitenden Zuleitung (33) mit dem Einschmelzvergaser (10) leitungsmäßig verbunden ist.

9. Anlage nach Anspruch 8, dadurch gekennzeichnet, daß von der ReduktionsgasZuleitung (12), die zum Reduktionsreaktor (3) führt, eine Zweigleitung (29) abzweigt und in den Kalzinierreaktor (26) mündet (Fig. 1).

10. Anlage nach Anspruch 9, dadurch gekennzeichnet, daß in der Reduktionsgas-Zuleitung (12) eine Gasreinigungseinrichtung (19) vorgesehen ist und daß die Zweigleitung (29) von der Reduktionsgas-Zuleitung nach der Gasreinigungseinrichtung (19) abzweigt.

11. Anlage nach Anspruch 9 oder 10, dadurch gekennzeichnet, daß der Kalzinierreaktor (26) mittels einer Abgasleitung (31) mit einem als erste der Reduktionszonen (5, 7, 8) dienenden Vorwärmreaktor (5) für das Erz leitungsmäßig verbunden ist.

12. Anlage nach Anspruch 8, dadurch gekennzeichnet, daß vom Reduktionsreaktor (1, 2, 3) eine Ableitung (14) für umgesetztes Reduktionsgas ausgeht, wobei von dieser Ableitung (14) eine Zweigleitung (34) in den Kalzinierreaktor (26) mündet (Fig. 2).

13. Anlage nach Anspruch 12, dadurch gekennzeichnet, daß in den Kalzinierreaktor (26) eine Leitung (32) für ein sauerstoffhältiges Gas mündet.

14. Anlage nach einem oder mehreren der Ansprüche 8 bis 13, gekennzeichnet
• durch mindestens zwei hintereinander in Serie geschaltete Wirbelschichtreaktoren (1 bis 3), wobei das Erz von Wirbelschichtreaktor (1) zu Wirbelschichtreaktor (2, 3) über Förderleitungen (6) in einer Richtung und Reduktionsgas von Wirbelschichtreaktor (3) zu Wirbelschichtreaktor (2, 1) über Reduktionsgas-Verbindungsleitungen (13) in die entgegengesetzte Richtung geführt ist, und wobei
• die Reduktionsgas - Zuleitung (12) für im Einschmelzvergaser (10) gebildetes Reduktionsgas in den in Fließrichtung des Erzes letztangeordneten Wirbelschichtreaktor (3) mündet.

15. Anlage nach einem oder mehreren der Ansprüche 8 bis 14, dadurch gekennzeichnet, daß der Kalzinierreaktor (26) als Schachtofen oder Drehrohrofen oder Wanderrost oder Etagenofen oder ein- oder mehrstufiger Wirbelschichtreaktor oder Gaszyklon oder als mehrstufige Gaszyklonkaskade ausgebildet ist.

## Claims

1. A method for producing liquid metal, in particular pig iron or liquid steel preproducts, from charging substances comprised of ore, in particular iron ore, and of fluxes, wherein the ore is directly reduced to sponge metal in at least one reduction zone (5, 7, 8), the sponge metal is melted along with fluxes in a melt-down gasifying zone (11) heated solely by supplying carbon carriers and blowing in an oxygen-containing gas, and a CO- and H₂-containing process gas serving as a reducing gas is produced, which is fed into the reduction zone (5, 7, 8) and is reacted there and subsequently is withdrawn, wherein slag-forming fluxes, in particular calcium carbonate, dolomite, etc., solely by means of the process gas are calcined in a calcining zone (26') that is separated from the reduction zone (5, 7, 8) and melt-down zone (11), characterized in that the calcining zone (26') is connected in parallel to the reduction zone (5, 7, 8) as regards the material flow and the calcined fluxes are fed into the melter gasifier (10) directly.

2. A method according to claim 1, characterized in that the calcining zone (26') is also connected in parallel to the reduction zone (5, 7, 8) as regards the process gas flow (Fig. 1).

3. A method according to claim 2, characterized in that the process gas, after having been discharged from the melt-down gasifying zone (11), is purified and cooled and subsequently a portion of the process gas is fed into the reduction zone (5, 7, 8) and a portion of the process gas is fed into the calcining zone (26').

4. A method according to claim 3, characterized in that process gas leaving the calcining zone (26') is admixed to the process gas leaving the reduction zone (7).

5. A method according to claim 3 or 4, characterized in that process gas leaving the calcining zone (26') is utilized for preheating and/or prereducing the ore in a prereduction zone (5).

6. A method according to claim 1, characterized in that the calcining zone (26') is connected in series to the reduction zone (5, 7, 8) as regards the process gas flow, with the process gas flowing first through the reduction zone (5, 7, 8) and subsequently through the calcining zone (26') (Fig. 2).

7. A method according to claim 6, characterized in that an oxygen-containing gas is fed into the calcining zone (26') and a portion of the process gas is burnt.

8. A plant for carrying out the method according to one or several of claims 1 to 7, comprising at least one reduction reactor (1, 2, 3), into which the ore is conducted via a conveying duct (6) in one direction and the reducing gas via a reducing-gas feed duct (12) in the opposite direction, and comprising a melter gasifier (10), into which there runs a conveying duct (9) conducting the reduction product from the reduction reactor (3), the melter gasifier (10) being heated solely through feed ducts (17, 16) for oxygen-containing gases and carbon carriers and having a tap (18) for liquid metal and slag as well as a reducing-gas feed duct (12) opening into the reduction reactor (3) for a reducing gas generated in the melter gasifier (10), characterized in that a calciner (26) is provided in parallel arrangement with respect to the reduction reactor (1, 2, 3) as regards the solids flow, wherein the calciner (26) is flow-connected with the melter gasifier (10) through a feed duct (33) conducting the calcined materials to the melter gasifier (10).

9. A plant according to claim 8, characterized in that from the reducing-gas feed duct (12), which leads to the reduction reactor (3), a branch duct (29) departs and runs into the calciner (26) (Fig. 1).

10. A plant according to claim 9, characterized in that a gas purifying means (19) is provided in the reducing-gas feed duct (12) and that the branch duct (29) departs from the reducing-gas feed duct at a position after the gas purifying means (19).

11. A plant according to claim 9 or 10, characterized in that the calciner (26) is flow-connected with a preheating reactor (5), serving as the first of the reduction zones (5, 7, 8), for the ore through an offgas duct (31).

12. A plant according to claim 8, characterized in that a discharge duct (14) for reacted reducing gas departs from the reduction reactor (1, 2, 3), with a branch duct (34) running into the calciner (26) from said discharge duct (14) (Fig. 2).

13. A plant according to claim 12, characterized in that a duct (32) for an oxygen-containing gas opens into the calciner (26).

14. A plant according to one or several of claims 8 to 13, characterized
• by at least two fluidized-bed reactors (1 to 3) subsequently connected in series, wherein the ore is conducted from fluidized-bed reactor (1) to fluidized-bed reactor (2, 3) via conveying ducts (6) in one direction and reducing gas is conducted from fluidized-bed reactor (3) to fluidized-bed reactor (2, 1) via reducing-gas connecting ducts (13) in the opposite direction, and wherein
• the reducing-gas feed duct (12) for reducing gas generated in the melter gasifier (10) runs into the fluidized-bed reactor (3) arranged last in the direction of the ore flow.

15. A plant according to one or several of claims 8 to 14, characterized in that the calciner (26) is constructed as a shaft furnace or rotary tubular kiln or traveling grate or multiple-hearth furnace or single-stage or multistage fluidized-bed reactor or gas cyclone or as a multistage gas cyclone cascade.

## Revendications

1. Procédé de préparation d'un métal liquide, en particulier de fonte brute ou de produits intermédiaires d'acier, à partir de minerai, en particulier de minerai de fer, et de charges formant des additifs, le minerai étant réduit directement en éponge métallique dans au moins une zone de réduction (5, 7, 8), l'éponge métallique étant fondue avec des additifs dans une zone de gazéification par fusion (11) chauffée seulement par introduction de matériaux contenant du carbone et insufflation de gaz contenant de l'oxygène, et un gaz de procédé servant de gaz réducteur contenant CO et H₂ étant produit, qui est introduit dans la zone de réduction (5, 7, 8) où il est converti et postérieurement soutiré, les additifs formant la scorie, en particulier le carbonate de calcium, la dolomite, etc., étant calcinés seulement au moyen du gaz de procédé dans une zone de calcination (26') séparée de la zone de réduction (5, 7, 8) et de la zone de fusion (11), caractérisé en ce que la zone de calcination (26') est reliée en parallèle à la zone de réduction (5, 7, 8), en ce qui concerne le flux de matériaux et les additifs calcinés sont directement introduits dans le dispositif de gazéification avec fusion (10).

2. Procédé selon la revendication 1, caractérisé en ce que la zone de calcination (26') en ce qui concerne le courant de gaz de procédé pour la zone de réduction (5, 7, 8) est reliée également en parallèle (figure 1).

3. Procédé selon la revendication 2, caractérisé en ce que le gaz de procédé est purifié et refroidi après départ de la zone de gazéification avec fusion (11) et une partie du gaz de procédé est introduite dans la zone de réduction (5, 7, 8) et une partie du gaz de procédé est introduite dans la zone de calcination (26').

4. Procédé selon la revendication 3, caractérisé en ce que le gaz de procédé sortant de la zone de calcination (26') est mélangé au gaz de procédé sortant de la zone de réduction (7).

5. Procédé selon la revendication 3 ou 4, caractérisé en ce que le gaz de procédé sortant de la zone de calcination (26') est attiré de celle-ci dans une zone de pré-réduction (5) pour le pré-chauffage et/ou la pré-réduction du minerai.

6. Procédé selon la revendication 1, caractérisé en ce que la zone de calcination (26') en ce qui concerne de courant de gaz de procédé pour la zone de réduction (5, 7, 8) est reliée en série, le gaz de procédé traversant d'abord la zone de réduction (5, 7, 8) et finalement la zone de calcination (26') (figure 2).

7. Procédé selon la revendication 6, caractérisé en ce qu'un gaz contenant de l'oxygène est introduit dans la zone de calcination (26') et qu'une partie du gaz de procédé est brûlé.

8. Dispositif pour la mise en oeuvre du procédé selon l'une ou plusieurs des revendications 1 à 7, présentant au moins un réacteur de réduction (1, 2, 3), dans lequel le minerai est amené par une conduite d'accélération (6) dans une direction et le gaz réducteur est amené dans la direction opposée par une conduite d'amenée de gaz réducteur (12), et un dispositif de gazéification avec fusion (10) dans lequel débouche une conduite d'accélération (9) amenant le produit de réduction hors du réacteur de réduction (3), le dispositif de gazéification avec fusion (10) étant chauffé seulement par des conduites d'amenée (17, 16) pour les gaz contenant de l'oxygène et des matériaux contenant du carbone et une coulée (18) pour le métal liquide et les scories ainsi qu'une conduite d'amenée du gaz réducteur (12) débouchant dans le réacteur de réduction (3) pour le gaz réducteur formé dans le dispositif de gazéification avec fusion (10), caractérisé en ce qu'un réacteur de calcination (26) est prévu en parallèle au réacteur de réduction (1, 2, 3) en ce qui concerne le courant du matériau solide, le réacteur de calcination (26) étant relié, du point de vue conduite, au dispositif de gazéification avec fusion (10) avec une conduite (33) amenant les matériaux calcinés au dispositif de gazéification avec fusion (10).

9. Dispositif selon la revendication 8, caractérisé en ce que la conduite d'amenée de gaz réducteur (12), qui conduit au réacteur de réduction (3), dérive une conduite de dérivation (29) et débouche dans le réacteur de calcination (26) (figure 1).

10. Dispositif selon la revendication 9, caractérisé en ce que dans la conduite d'amenée du gaz réducteur (12) est prévu un dispositif de purification de gaz (19) et que la conduite de dérivation (29) dérive de la conduite d'amenée du gaz réducteur après le dispositif de purification du gaz (19).

11. Dispositif selon la revendication 9 ou 10, caractérisé en ce que le réacteur de calcination (26) est relié du point de vue conduite au moyen d'une conduite d'échappement de gaz (31) avec un réacteur de préchauffage (5) servant de première zone de réduction (5, 7, 8) pour le minerai.

12. Dispositif selon la revendication 8, caractérisé en ce que sort du réacteur de réduction (1, 2, 3) une conduite d'amenée (14) pour le gaz réducteur converti, une conduite de dérivation (34) débouchant dans le réacteur de calcination (26) à partir de cette conduite d'amenée (14).

13. Dispositif selon la revendication 12, caractérisé en ce qu'une conduite (32) pour le gaz contenant de l'oxygène débouche dans le réacteur de calcination (26).

14. Dispositif selon l'une ou plusieurs des revendications 8 à 13, caractérisé par au moins deux réacteurs à couches fluidisées (1 à 3) placés en série l'un derrière l'autre, le minerai étant amené depuis le réacteur à couches fluidisées (1) au réacteur à couches fluidisées (2,3) par des conduites d'amenée (6) dans une direction et le gaz réducteur du réacteur à couches fluidisées (3) au réacteur à couches fluidisées (2,1) par des conduites de raccordement du gaz réducteur (13) en direction opposée, et la conduite d'amenée de gaz réducteur (12) pour le gaz réducteur formé dans le dispositif de gazéification avec fusion (10) débouchant dans le réacteur à couches fluidisées (3) placé le dernier en direction de coulée du minerai.

15. Dispositif selon l'une ou plusieurs des revendications 8 à 14, caractérisé en ce que le réacteur de calcination (26) est conçu comme un four à cuve ou un four rotatif ou une grille mécanique ou un four à étages ou un réacteur à couches fluidisées à un ou plusieurs étages ou un cyclone gazeux ou comme une cascade de cyclones gazeux à plusieurs étages.
